# EUROPEAN PATENT SPECIFICATION

(11) **EP 3 489 105 B1**
(45) Date of publication and mention of the grant of the patent: **27.04.2022**
(21) Application number: 17845354.4
(22) Date of filing: 26.08.2017
(51) Int. Cl.: B61D 1/02

(54) **RAILWAY VEHICLE CARRIAGE STRUCTURE AND RAILWAY VEHICLE**
SCHIENENFAHRZEUGWAGENSTRUKTUR UND SCHIENENFAHRZEUG
STRUCTURE DE WAGON DE CHEMIN DE FER ET VÉHICULE FERROVIAIRE

(30) Priority: 28.08.2016 CN 201610737515
(43) Date of publication of application: 29.05.2019
(73) Proprietor: CRRC Qingdao Sifang Co., Ltd., Qingdao, Shandong 266111 (CN)
(72) Inventor: CHEN, Dawei, Qingdao Shandong 266111 (CN); HU, Huaxin, Qingdao Shandong 266111 (CN); DONG, Qingjing, Qingdao Shandong 266111 (CN); LIN, Lan, Qingdao Shandong 266111 (CN)
(74) Representative: Herrmann, Uwe
(86) International application number: PCT/CN2017/099195
(87) International publication number: WO 2018/041052

(56) References cited:
- EP-A1- 0 625 457
- EP-A1- 0 760 321
- EP-A2- 2 060 470
- WO-A1-99/48458
- CN-A- 105 398 462
- CN-U- 201 484 417
- CN-U- 205 971 314
- CN-U- 206 049 671
- CN-U- 206 049 672
- CN-U- 206 049 674
- CN-U- 206 049 690
- CN-U- 206 141 548
- CN-U- 206 141 549
- CN-U- 206 187 011
- DE-U1- 9 421 209
- US-A- 1 168 335
- US-A- 2 400 462
- US-A- 4 161 914
- US-A1- 2016 129 922

## Description

### FIELD

The present application relates to a high-speed railway vehicle such as a multiple unit, and particularly to a railway vehicle carriage structure and a railway vehicle having the railway vehicle carriage structure, belonging to the technical field of interior equipment of railway vehicle.

### BACKGROUND

With the rapid development of high-speed railway vehicles, the requirement on the equipment inside a carriage is becoming higher and higher, so as to improve the level of the carriage and meet the personalized need of high-end passengers. High-speed trains are all formed by coupling multiple carriages, and doors for passengers to get on and off are provided at one end or both ends of each carriage. One door is provided on each side at a lateral direction of a vehicle body, and an area directly opposite to the doors is a vestibule located between two carriages. At present, the vestibule of a train is basically a long and narrow passageway with the same width as the door. Long and narrow aisles for passengers to separately enter into two carriages are respectively provided on both sides of the passageway.

At the end of the aisle is a carriage end door, passengers enter the carriage through the carriage end door. Facilities such as a drinking room, a bathroom, a washroom and a large luggage rack are provided on both sides of the aisle and occupy a large space of the vestibule between two carriages. Passengers board and alight only through the long and narrow passageway and aisles, at the station where a large number of passengers board and alight, the passageways and aisles will be very crowded, which seriously affects the comfort of passengers.

EP2060470 A2 discloses that a double stack-railway vehicle has two intermediate stacks and extends from a car end to another car end in a longitudinal direction. A toilet and parking position are arranged in an intermediate stack, where the toilet is arranged between an access and a lower stack relative to the longitudinal direction.

US4161914 A discloses that a railway passenger sleeping car is provided with standard base compartments communicating with a standard size aisle remotely positioned from the car vestibule. The car includes a vestibule having an enlarged aisle which communicates with an enlarged compartment having an annex for storing special equipment for the handicapped. The vestibule aisle and enlarged compartment are positioned close to the car door openings.

US2400462 A discloses that, in a vehicle, two narrow elongated compartments arranged together in the general form of an L, two wall portions separating said compartments from each other, diverging from about the intersection of the inner walls of the L and including acute angles with the direction of the short arm of the L; a pair of doors, one door forming at least partly one of said wall portions and the other door forming at least partly the other of said wall portions; the one door being hingedly attached near or at said intersection for swinging movement into the interior of the compartment constituting the long arm of the L.

DE9421209 U1 discloses that a double-deck rail vehicle has a double-deck steering car, at one end of the vehicle, in the one-piece part, the entry area above the turning points (standard entry) and at the other end of the vehicle at the bottom of the two-piece part the entry area (low-floor access). The functional elements of the vehicle, such as the driver's position, equipment, toilets and service doors, shall be indicated and shall not bear any reference marks. The entry area is arranged over both sides of the rail vehicle, preferably two-way sliding doors in e.g. 3-track version. In order to ensure favourable conditions of entry from high and low platforms, floor of entry area is reduced compared to the standard height of vehicles for UIC traffic. A foldable external step level and a solid step with step shaft in the rail vehicle are further elements for achieving the above-mentioned favourable entry conditions at different platform heights. The passenger flow in the rail vehicle is from the entry area through a staircase to the lower deck and through a staircase to the upper deck of the vehicle. It is also possible, in principle, to provide for a three-stage system, i.e. a central staircase leads from entrance area to the upper level and each one on the left and right of this lying staircase leads to the lower level. The pre-negotiated two-step system has the advantage of a smooth 2-track passenger flow for both levels, which is very effective for short stays with a strong passenger change. On the other hand, the entry area, which also has two-way sliding doors, preferably, provided on both sides of the railway vehicle, guarantees the flow of passengers to the upper deck by means of a two- or three-stage system.

WO9948458A1 discloses that in a device for transferring especially a person sitting in a wheel-chair between a platform and a passenger department of a vehicle having a floor on a higher level than the platform a first floor surface is arranged inside the vehicle closest to an entrance into the vehicle from a platform side and arranged on substantially the same level as the platform. Power means are adapted to move a support surface arranged inside the vehicle and reachable through the first floor surface between platform level and the level of the floor of the passenger department so as to join a first floor surface and a second floor surface leading to the passenger department or belonging thereto, respectively. A staircase is arranged between the two levels beside the support surface and directly reachable through the first floor surface as well as the second floor surface independently of the position of the support surface.

US2632408A discloses that a passenger compartment or the like having a side wall with a series of windows therealong, said compartment having therein a series of individual passenger seats along said side wall and facing windowward, each of which said seats is individually adiustable from an upright seating position to a reclining position and is individually movable oblilavely toward and away from the side wall along a prescribed path paralleling the path of oblique movement of the next adjoining seat, each seat at the extremity of its oblique movement away from the side wall having a space at one side thereof which is unobstructable by any other of said seats and has a passenger entrance therefrom to the front of such seat.

### SUMMARY

The main purpose of the present application is to solve the above-described problems and disadvantages, to provide a space that can enlarge for people to pass through, and effectively improve a railway vehicle carriage structure when a large number of people are boarding and alighting in an overcrowded state.

Another main purpose of the present application is to provide a railway vehicle having the railway vehicle carriage structure.

To achieve the above purpose, the technical solution of the present application is as follows.

A railway vehicle carriage structure, comprising a carriage, a vehicle body and doors for passengers to board and alight being provided on two sides of the vehicle body at an end portion of at least one end of the carriage, wherein an area directly opposite to the doors is a vestibule, and a space of the vestibule as a whole is circular. Two columns of seat units are provided in the carriage in a length direction of the vehicle body, the seat units at the front and rear are staggered and overlapped in the length direction of the vehicle body, each seat unit includes a seat, and the seat is inclined towards a side wall on the respective side where the seat is located. Each seat unit is separated by a seat partition, which includes a transverse partition and a longitudinal partition, the transverse partition is S-shaped, and the seat extends in a space of an outer side of the transverse partition of the seat unit sinking outwards and extends in a space of an inner side of the transverse partition of the seat unit at the front sinking inwards. A partition door is provided on the longitudinal partition, the partition door is a sliding door, the longitudinal partition is a hollow structure, and the partition door is hidden inside the longitudinal partition when being opened

Further, one or more of a leisure area, a bathroom, a power distribution cabinet and a washstand are provided around the vestibule.

Further, the carriage includes a plurality of compartments separated by compartment partitions, a compartment door is provided on the compartment, and each compartment has a rest area and a bathroom.

Further, a sitting and sleeping dual-purpose device is provided in the rest area, and the bathroom is separated by a partition, on which a bathroom door is installed.

Further, the sitting and sleeping dual-purpose device at least includes a sofa stool and a group of multi-person sofa that can shift between sitting and sleeping, and the multi-person sofa in a sleeping position is combined with the sofa stool to form a horizontal bed.

Further, the compartment partition immediately adjacent to an aisle is a wavy structure including a plurality of arc-shaped partitions.

Another technical solution of the present application is:
A railway vehicle, including the railway vehicle carriage structure as above-described.

Further, seat units arranged in the length direction of the vehicle body are included in the carriage, and a set of windows corresponding to each seat unit are provided on the vehicle body.

Further, the windows extend continuously upward from a side wall of the vehicle body to a position of a roof of the vehicle body.

Further, the carriage includes a plurality of compartments separated by a compartment partition, and each compartment has a rest area and a bathroom, a first window is provided on a side wall of the vehicle body corresponding to the rest area, and a second window is provided on a side wall of the vehicle body corresponding to the bathroom.

Further, the first window and the second window extend continuously upward from a side wall of the vehicle body to a position of a roof of the vehicle body.

Further, a double-layer head carriage and a double-layer middle carriage, wherein an upper layer of the first carriage is a sightseeing carriage, and a lower layer is a bar carriage; an upper layer of the middle carriage is a passenger carriage, and a lower layer of the middle carriage is a cargo carriage.

In conclusion, comparing with the conventional technology, the railway vehicle carriage structure and the railway vehicle described in the present application have the following advantages.
(1) The vestibule area where two carriages are connected is designed to be circular in the present application to enlarge the passing space herein for people, which can effectively relieve the overcrowded state when a large number of people boards and alights, and increase the comfort of passengers.
(2) Facilities such as the washstand, the storage rack, the bathroom and the leisure area are provided in the vestibule area after entering through the door in the present application, and by a reasonable layout of various facilities in the vestibule, the space utilization of the carriage end part is greatly improved, it is not only convenient for passengers to use, but also the area where passengers can move is increased accordingly, thus further improving the comfort of passengers.

### BRIEF DESCRIPTION OF THE DRAWINGS

Fig. 1 is a schematic structure view of a head car carriage of a railway vehicle in the present application;
Fig. 2 is a structure plan view of the head car carriage of the railway vehicle in the present application;
Fig. 3 is a schematic structure view of a middle carriage of a railway vehicle in the present application;
Fig. 4 is a schematic structure view of a vestibule of the first-class middle compartment in the present application;
Fig. 5 is a schematic structure view of a cross section of the vestibule in the present application;
Fig. 6 is a structure plan view of a vestibule of a business carriage in the present application;
Fig. 7 is a schematic structure view of a decorative light in the present application.

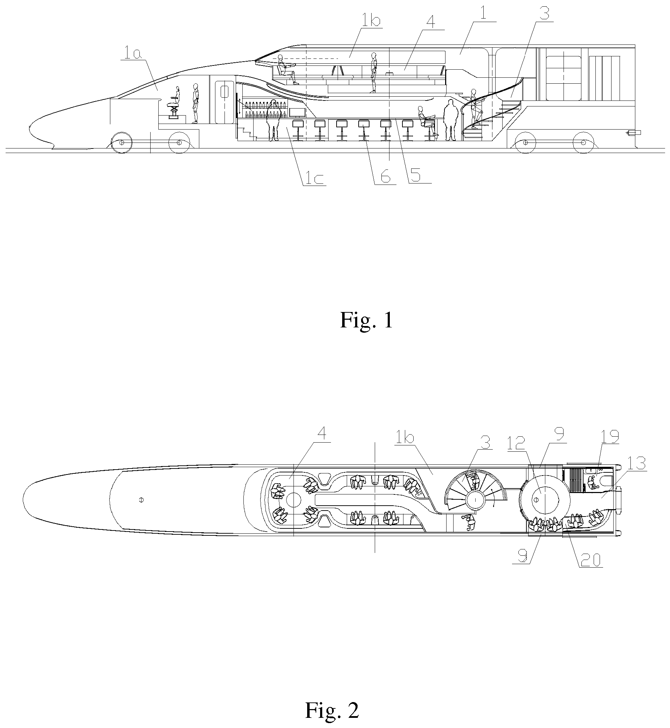

As shown in Fig. 1 to Fig. 7:
head carriage - 1, driver compartment - 1a, sightseeing carriage - 1b,
bar carriage - 1c, middle carriage - 2, passenger carriage - 2a,
freight carriage - 2b, staircase - 3, sightseeing sofa - 4, bar table - 5,
bar chair - 6, passenger carriage floor - 7, supporting structure - 8,
door - 9, waiting area - 10, passageway - 11, vestibule - 12,
aisle - 13, partition - 14, number light - 15, decorative light - 16,
handrail - 17, washstand - 18, toilet - 19, leisure area - 20,
storage rack - 21, carriage end door - 22, leisure sofa - 23,
power distribution cabinet - 24, seat unit - 25, carriage aisle - 26,
seat partition - 27, side wall - 28, seat - 29, table - 30,
functional chair - 31, television - 32, partition door - 33,
window - 34, compartment - 35, carriage aisle - 36,
compartment partition - 37, compartment door - 38, rest area - 39,
bathroom - 40, compartment - 41, bathroom door - 42,
washbasin - 43, toilet - 44, bathtub- 45, first window - 46,
second window - 47, groove - 48, LED light source board - 49,
light transmission material - 50, sitting and sleeping dual-purpose device - 51.

### DETAILED DESCRIPTION OF EMBODIMENTS

The present application is described below in further detail with reference to the accompanying drawings and specific embodiments.

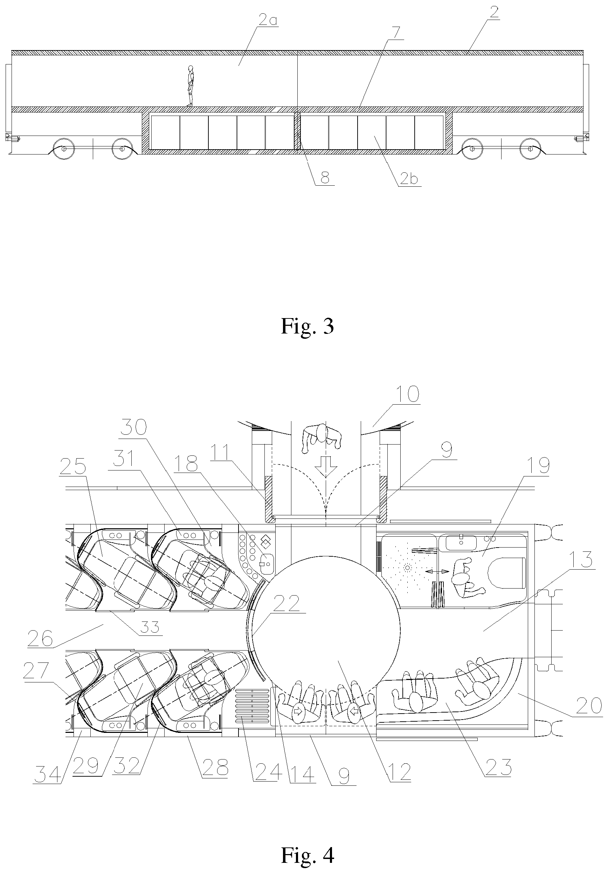

As shown in Fig. 1 and Fig. 3, a railway vehicle provided by the present application includes first carriages at both ends and multiple middle carriages 2 in the middle.

As shown in Fig. 1 and Fig. 2, the head carriage 1 is composed of a driver compartment 1a, and an upper sightseeing carriage 1b and a lower bar carriage 1c adjacent to the driver compartment 1a. The upper sightseeing carriage 1b and the lower bar carriage are connected through a staircase 3. The upper sightseeing carriage 1b has a part higher than the driver compartment 1a, and side-wall windows are provided on a side wall of the higher part, and a skylight with large field of vision is provided on the roof of the vehicle, the side-wall windows extend backwards from the vehicle head along both sides and surround the vehicle body. A sightseeing sofa 4 for passengers to use is provided in the sightseeing carriage 1b, the sightseeing sofa 4 corresponds to the annular side-wall window and is also annular. When sitting on the sightseeing sofa 4, passengers can view the outside scenery through the annular side-wall windows and the skylights on the roof. When sitting in the sightseeing carriage 1b, passengers can enjoy the scenery outside the vehicle through the annular side-wall windows on three sides, and get a panoramic view experience, which greatly improves the functionality and comfort of the vehicle.

Facilities such as bar tables 5, bar chairs 6 and wine cabinet for passengers to relax and recreate are provided in the bar carriage 1c. The arrangement of the sightseeing carriage 1b and the bar carriage 1c can not only provide a panoramic view experience to the passengers and improve the riding comfort, but also increase the sightseeing and entertainment functions of the railway vehicle, thus meeting the requirements of high-level passengers.

As shown in Fig. 3, each middle carriage 2 is also divided into an upper layer and a lower layer, the upper layer is a passenger carriage 2a for passengers to sit, the lower layer is a freight carriage 2b for cargo storage, and the upper passenger carriage 2a and the lower freight carriage 2b are separated by the floor of the passenger carriage. The upper passenger carriage 2a includes a business compartment carriage, a first-class compartment and a second-class carriage.

The upper passenger carriage 2a and the lower freight carriage 2b correspond to two platforms respectively, passengers and cargo board and alight from different platforms, thus separating people and cargo without affecting each other, which can not only greatly shorten the stopping time of each station, but also ensure the boarding and alighting safety of passengers, especially suitable for long-distance operation. In order to facilitate the identification and the loading and unloading of the cargo, the cargo are all placed in small containers, and the identification and the loading and unloading of containers are automatically completed by robots.

The lower freight carriage 2b is a through structure, in the middle of which, a partition structure is provided to separate an equipment compartment and a cargo compartment. The equipment compartment is located above a bogie, and the cargo compartment is located between two bogies. A supporting structure 8 is provided in the cargo compartment at a certain interval. The supporting structure 8 is preferred to adopt a metal frame structure to ensure the overall structural strength of the supporting structure 8, and the supporting structure 8 is arranged along the width direction of the vehicle body. In addition to supporting the upper passenger carriage 2a, the supporting structure 8 can also separate the cargo compartment into several different functional areas to facilitate the separate placement of different types of cargos, and facilitate the identification and the loading and unloading of the cargo.

A skirt plate is installed on both sides in the vehicle width direction of the equipment compartment of the freight carriage 2b, a folding door (not shown in the Fig.) is provided on both sides in the width direction of the cargo compartment, and structures such as ball bearings are provided on the floor of the cargo compartment to facilitate the movement of the containers on the floor, and container positioning structures are also provided on the floor. After being installed at the prescribed position, the containers are fixed by the positioning structures to ensure that the containers can be stably fixed during the long-distance transportation of the vehicle. When the cargo is required to be loaded and unloaded at a station, the folding door is opened upward, and the robot automatically identifies the container that needs to be unloaded and then pushes it out of the freight carriage 2b into an unloading area of the platform. At the same time, the robot pushes a new container that needs to be loaded into the freight carriage 2b from a loading area of the platform according to a setting position.

As shown in Fig. 2, Fig. 4 and Fig. 6, doors 9 for passengers to board and alight are provided on two sides of a vehicle body of one end of the first carriage 1 and one end or two ends of each middle carriage 2. A retractable passageway 11 is provided between a waiting area 10 on the platform and the door 9, and passengers can board and alight directly through the dedicated passageway 11, the existing train platform is not required any more, passengers no longer need to enter the platform first from the waiting area 10 and then board from the platform, which shortens the time for passengers to board and alight, improves the safety of passengers to board and alight, and also improves the comfort of passengers to board and alight, thus meeting the humanized requirement of passengers. The passageway 11 adopts a retractable structure and extends out to make that its end to closely fit with the door 9 and to make the waiting area 10 to be connected with the door 9 when a vehicle enters a station. After the passengers boards and alights, the passageway can be retracted without affecting the other functions of the platform.

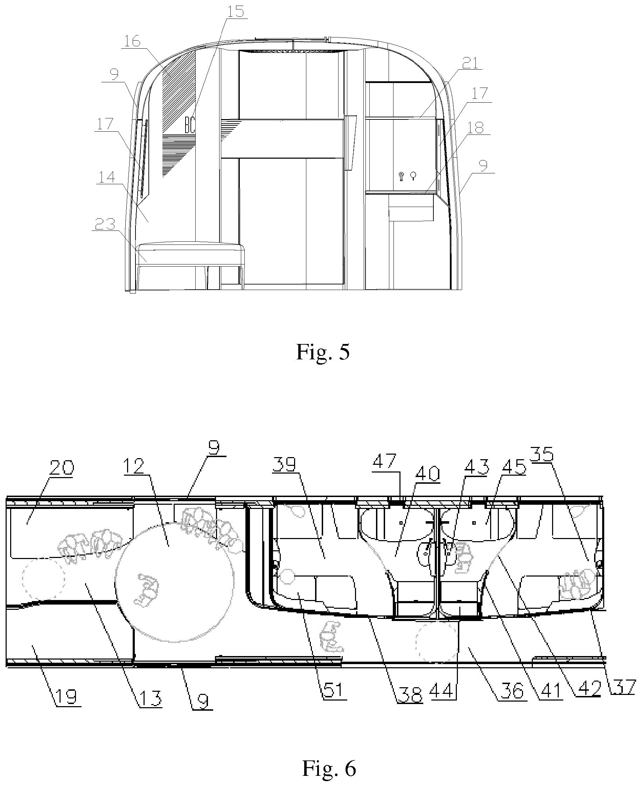

As shown in Fig. 4 and Fig. 5, a middle carriage 2a as the first-class compartment includes two columns of seat units 25 arranged in the length direction of the vehicle body, and between the two columns of seat units 25 is a carriage aisle 26. The front and rear seat units 25 are staggered and overlapped in the length direction of the vehicle body to reduce the space occupied by each seat unit. Thus on the premise of guaranteeing the comfort of passengers, the number of passengers allowed to be accommodated in the carriage is greatly increased, and thus the utilization rate of space in the carriage is improved maximally.

Each seat unit 25 is separated by a seat partition 27, and the seat partition 27 adopts a half-high partition, which not only guarantees the comfort of passengers, but also makes each seat unit 25 to have excellent privacy. The seat partition 27 is an L-shaped structure consisting of a transverse partition and a longitudinal partition, of which the transverse partition is S-shaped. The inner side of the transverse partition (i.e., the side immediately adjacent to the side of the side wall 28) is sunken to the inner side of the seat unit 25, and the outer side of the transverse partition (i.e., the side immediately adjacent to the carriage aisle 26) is sunken to the outer side of the seat unit 25. The transverse partition and the longitudinal partition are fixed by connecting parts, and bottoms of the transverse partition and the longitudinal partition are fixed to the floor of the carriage. One side of the transverse partition is fixed with the side wall 28. A partition door 33 is provided between the longitudinal partitions of the front and rear seat units 25 for closing a passage gap between the adjacent two seat units 25. Decorative lights and number lights (not shown in the Figures) are provided on an outer surface of each longitudinal partition, which make passengers to easily find their own seat units 25 as soon as possible. The decorative light not only can play the role of lighting, but also can increase the overall aesthetics of carriage interior decoration.

A window 34 is provided on the side wall 28 corresponding to each seat unit 25. The windows 34 of all seat units 25 are independent of each other. The activities of passengers in the seat unit 25 may not be reflected onto the windows of the adjacent seat unit 25 through the reflection of the glass of the window 34, thus the privacy of each seat unit 25 can be further improved. In the present embodiment, the window on the side wall 28 extends continuously upward from the side wall position to the roof position. The whole window is lathy and has an upper part with a curved shape, including the part of the side wall and the part of the side roof (where the roof is connected with the side wall). The shape of the window 34 is the same as that of the vehicle body. The window having this structure increases the area of the window corresponding to each seat unit 25 and the overall height of the window, and further greatly increases the window vision, improves the visual effect and provides the best sight and user experience for passengers.

Each seat unit 25 includes a seat 29, a footrest (not shown in the Figures), a table 30 and a functional chair 31. Each seat 29 is arranged to incline in the direction of the side wall 28 at the respective side, i.e., inclining in the moving direction of the vehicle. The seat 29 extends in a space of the outer side of the transverse partition of the seat unit 25 sinking outwards and extends in a space of the inner side of the transverse partition of the seat unit 25 at the front sinking inwards, to save the space occupied by each seat unit 25 to uttermost extent and increase the utilization rate of space in the carriage. When passengers sit on the seat 29 inclining towards the window, through the window 34 extending upward from the side wall 28 to the side roof, the passengers can enjoy a more perfect scenery outside the vehicle, and reduce the feeling of carsickness to a certain extent.

The seat 29 is composed of a backrest, a seat cushion and a motion mechanism. When the seat is converted to a recumbent position from a sitting position, the motion mechanism drives the seat cushion to move forward, and the backrest moves downward, until the seat cushion and the backrest are on a same horizontal plane. The seat cushion can be remained in any middle position, that is, the backrest can be remained at any angle of leaning. The conversion between the sitting position, recumbent position and any leaning position can be implemented by operating the switch by passengers, which can meet different requirements of the passengers.

The footrest is fixed below the inner side of the transverse partition of the front seat unit 25. When the seat 29 is in a recumbent position, a seat cushion may extend forward to the footrest, and the footrest, the seat cushion and the backrest form a horizontal sleeper together. The table 30 is provided between the other side of the seat 29 and the side wall 28. The table 30 is formed by a plane formed by sinking forwards the lower part of the transverse partition. The table 30 and the transverse partition are formed integrally. A wall lamp is also installed on the transverse partition above the table 30, and the passengers can control the wall lamp depending on their needs, which is convenient for passengers to use. The footrest in a rear seat unit 25 is installed in the front sunken space of the transverse partition. In front of the table 30, the functional chair 31 which is active and installed independently is also provided. The functional chair 31 is placed directly on the floor of the carriage. Passengers can move the functional chair 31 to the desired position and angle according to their needs for convenience use. The functional chair 31 can be used for passengers who temporarily come to the seat unit 25 to sit, so that they can chat with passengers in the seat unit 25 conveniently. In order to improve the riding comfort, a television 32 is also installed in each seat unit 25, and the television 32 is installed on the transverse partition of the front seat unit 25.

As shown in Fig. 6, a middle carriage 2 as the business carriage includes multiple compartments 35 arranged in one side of the carriage, the compartments 35 are separated by a fully enclosed compartment partition 36, and a compartment door 37 is provided on the compartment partition 36. Each compartment 35 has a rest room 38 and a bathroom 39. A sitting and sleeping dual-purpose device is provided in the rest room. A toilet, a washstand and a bathtub are installed in the bathroom 39.

As shown in Fig. 6, the business carriage provided by the present application includes six compartments 35, which are provided on one side of the carriage in the length direction of the vehicle body, and between the compartments 35 and the side wall 28 on the other side is a carriage aisle 36.

The compartments 35 are formed by partitioning with compartment partitions 37, a compartment door 38 for passengers to enter and exit is provided on the compartment partition 37 of each compartment 35. Each compartment 35 has a rest area 39 and a bathroom 40, and a sitting and sleeping dual-purpose device 51 is installed in the rest area 39. During the day, the rest area 39 can provide a space for sitting and activity, and at night, it can be used as a bed for rest. Each compartment 35 can be used by two adults and one or two children, and may provide a full range of services for passengers, which not only makes full use of a limited space, but also is easy to use, and thus can meet the higher requirements for privacy and comfort of VIP and other high-end consumer groups.

The compartment partition 37 immediately adjacent to the carriage aisle 36 consists of multiple arc-shaped partitions, and two compartments 35 are included in each arc-shaped compartment partition. The arc-shaped design is adopted by the compartment partition 37, on the premise of not affecting the available space in the compartment 35, the space for people to pass through the carriage aisle 36 is relatively enlarged, which can effectively avoid the crowded state when multiple passengers stagger in the carriage aisle 12 and improve the comfort of passengers.

The bathroom 40 is separated by a partition 41, a bathroom door 42 is installed on the partition 41, and a washbasin 43, a toilet 44 and a bathtub 45 are provided in the bathroom 40 to meet different requirements of the passengers.

Two windows are installed in each compartment 35. A first window 46 is provided on the side wall 28 of the vehicle body corresponding to the rest area 39, and a second window 47 is provided on the side wall 28 of the vehicle body corresponding to the bathroom 40. Passengers in the rest area 39 or in the bathroom 40 can enjoy the scenery outside the window through the first window 46 and the second window 47, which improves the riding comfort. In order to ensure privacy requirements of the passengers, the first window 46 and the second window 47 extend continuously upward from the side wall 28 to the vehicle roof, the structure of the first window 46 and the second window 47 increases the area of the window and the overall height of the window of the respective compartment. The first window 46 and the second window 47 include a part of the side wall and a part of the side roof, which thus greatly broaden the horizon of the window, improves the visual effect, and provides the best view and user experience for passengers.

As shown in Fig. 2, Fig. 4, Fig. 5 and Fig. 6, in the present embodiment, a double door structure with two doors are adopted by the door 9 at one end of the first carriage 1 and the door 9 at one end of each middle carriage 2, and the double door structure is connected with the retractable passageway 11. The door at the other end of the middle carriage 2 is a single door structure, which enables passengers to board from the platform directly or to enter the platform directly after alighting.

A carriage end door 22 for passengers to enter into the carriage after boarding is provided at the end of the first carriage 1 and the middle carriage 2. After boarding from the door 9, passengers enter into the carriage through the carriage end door 22 on one side. For the sightseeing carriage 1b, after entering from a carriage end door 22, passengers enter the upper sightseeing carriage 1b through an upward staircase 3, and enter the lower bar carriage 1C through a downward staircase 3.

The area directly opposite to the door 9 is a vestibule 12, which is a transitional area for passengers to temporarily stop after boarding or before alighting from the door 9. In the present embodiment, the vestibule 12 as a whole is designed to be circular, and the carriage end door 22 is provided on one side of the circular vestibule 12. The carriage end door 22 is preferred to adopt a double door structure consisting of two doors. Each carriage end door 22 adopts an arc-shaped structure matching with a circular arc partition 14 of the circular vestibule 12. On the other side of the circular vestibule 12, the adjacent carriage is connected through an aisle 13. The circular structure of the vestibule 12 at the junction between two carriages increases the aesthetic feeling, and relatively increases the area of the vestibule 12, increases the number of people that can be accommodated by the vestibule 12, and enlarges the passing space herein for people, which can effectively relieve the overcrowded state when a large number of people are boarding and alighting, and further increase the comfort of passengers.

The circular arc partition 14 is provided around the circular vestibule 12, the partition 14 separates the vestibule 12 and the carriage, and the partition 14 separates the various functional areas within the vestibule 12. The partition 14 adopts a composite board structure. The outermost layer of the composite board is a decoration board. The decoration board adopts a wood grain pattern to improve the overall aesthetic effect of the partition 14.

As shown in Fig. 5, in order to facilitate passengers to board and alight, a handrail 17 is installed on at least one side of the partition 14 at the entrance of the door 9. Preferably, the handrail 17 is installed on each side of the partition 14 to facilitate boarding and alighting of the passengers, and also to ensure passengers' safety during boarding and alighting.

As shown in Fig. 5, in order to facilitate passengers to board and alight, a number light 15 and a decorative light 16 are installed on at least one side of the partition 14 at the entrance of the door 9. The number light 15 is convenient for passengers to confirm whether they board the correct carriage. The decorative light 16 can not only play the role of lighting, but also play the role of decoration and thus enhance the overall aesthetic effect of the vestibule 12. A top lamp (not shown in the Fig.) may also be installed on the top of the vestibule 12, to further play the role of lighting and decoration.

The decorative light 16 can be a tape light consisting of several parallel light bars. The light bar can adopt a horizontal light bar, a vertical light bar, an oblique light bar or an arc light bar. The decorative light 16 can also adopt a special figure or pattern consisting of several light bars. In the present embodiment, it is preferable to provide multiple parallel and oblique light bars on the outer surface of the partition 14, and multiple light bars form an oblique tape light, which is concise, beautiful and generous.

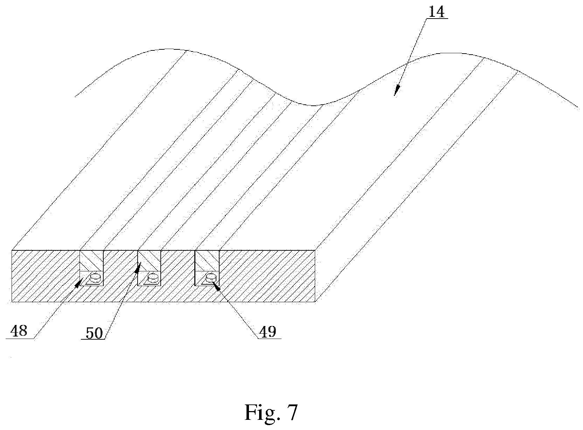

As shown in Fig. 7, at the positions of the number light 15 and the decorative light 16, grooves 48 are provided on the corresponding composite board of the partition 14 according to the Fig. and pattern. The groove 48 can be a recess or hollow groove. The shape of the groove 48 is the same as that of the tape light. A light source is installed inside the groove 48. The light source adopts an LED light source board 49, which is fixed on the partition 14 through screws, and a layer of transmittance material 50 covers on the LED light source board 49. The transmittance material 50 is preferred to adopt acrylic material, the transmittance material 50 is fixed on the partition 14 by glue, and the transmittance material 50 are flush with the surface of the partition 14, so that the whole surface of the partition 14 is flat, thereby ensuring the overall aesthetics of the partition 14. When the LED light is on, the light emitted by the LED light source board 49 is transmitted from the transmittance material 50, and different shapes of tape lights or other special figures and patterns are displayed at the same time.

The number light 15 and the decoration light 16 may also adopt another structure, at the positions of the number light 15 and the decoration light 16, a groove with an area that can cover the whole Fig. and pattern is provided on the composite wood board of the partition 14. Multiple LED light source boards are installed inside the groove, a layer of light transmitter material is covered on the LED light source board. The light transmitter material is fixed on the partition 14 by glue, and a layer of a shading film (not shown in the Fig.) is covered on the surface of the light transmitter material. The shading film is fixed on the transmitter material by glue. There are openings on the shading film according to the designed figures and patterns, the required figures and patterns can be formed by the light transmitted from the openings. The surface pattern or material of the shading film should be the same as that of the partition 14, to ensure the overall aesthetics of the partition 14.

As shown in Fig. 2, Fig. 4, Fig. 5 and Fig. 6, in the present embodiment, facilities such as a washstand 18, a bathroom 19, a leisure area 20 and a power distribution cabinet 24 are installed around the circular vestibule 12.

The washstand 18 is installed on one side at the entrance of one of doors 9, that is, the washstand 18 is installed in the space between the door 9 and the carriage end door 22 of this carriage, which is equivalent to omitting the separate washroom in the existing column, making full use of the dead space between the entrance 9 of the door and the partition 14 on the side, and which is equivalent to making use of the inwardly concave space of the transverse partition of the seat unit 25. The washstand 18 includes a washbasin and a faucet, and other devices such as a sewer is hidden in the cabinet surrounded by the partition 14 below the washstand 18. A shelf 21 is fixed above the washstand 18 for passengers to place towels and other items. Mirrors and one or two spotlights are also installed the on partition 14 above the shelf 21 for passengers to use. As shown in Fig. 2 and Fig. 5, the washstand may also not be provided for the first carriage and the business carriage depending on the space limitation.

A bathroom 19 is provided on one side of the aisle 13, and is opposite to the washstand 18, and the bathroom 19 and the washstand are respectively located on two sides of the door 9. A toilet and a washstand are provided in the bathroom 19, which is convenient for passengers to use. An identification lamp is provided on a partition of the bathroom 19.

In the present embodiment, area at the other side of the door 9, that is, the area at the other side of aisle 13 opposite to the bathroom 19, is used as a leisure area 20 for passengers to temporarily relax, leisure facilities such as a leisure sofa 23 are installed in the leisure area 20, and a simple tea table can also be placed beside the leisure sofa 23 for passengers to use.

In the area opposite to the leisure area 20 on the other side of the door 9, a power distribution cabinet 24 is installed. The power distribution cabinet 24 and the washstand 18 are respectively located on both sides of the carriage end door 22. Same as the washstand 18, the power distribution cabinet also makes full use of the dead space between the entrance of the door 9 and the partition 14 on the side.

The design of facilities such as the washstand 18, the bathroom 19, the leisure area 20, the power distribution cabinet 24 surrounding the circular vestibule 12 according to the present application, makes the space structure of the whole vestibule 12 very compact. Through a reasonable layout of the facilities inside the vestibule 12, the space utilization ratio of the end of the carriage is greatly improved, which not only facilitates passengers to use, but also provides more functions for passengers, and the area in which passengers can move is increased accordingly, which further improves the function of the train and the comfort of passengers, so as to provide better service for passengers, especially suitable for long-distance trains.

In conclusion, similar technical solutions can be derived within the scope of the claims.

## Claims

1. A railway vehicle carriage structure, comprising a carriage, a vehicle body and doors (9) for passengers to board and alight being provided on two sides of the vehicle body at an end portion of at least one end of the carriage, wherein an area directly opposite to the doors (9) is a vestibule (12), and a space of the vestibule (12) as a whole is circular,
**characterised in that**
two columns of seat units (25) are provided in the carriage in a length direction of the vehicle body, the seat units (25) at the front and rear are staggered and overlapped in the length direction of the vehicle body, each seat unit (25) comprises a seat (29), and the seat (29) is inclined towards a side wall on the respective side where the seat (29) is located,
wherein each seat unit (25) is separated by a seat partition (27), which comprises a transverse partition and a longitudinal partition, the transverse partition is S-shaped, and the seat (29) extends in a space of an outer side of the transverse partition of the seat unit (25) sinking outwards and extends in a space of an inner side of the transverse partition of the seat unit (25) at the front sinking inwards,
wherein a partition door (33) is provided on the longitudinal partition, the partition door (33) is a sliding door, the longitudinal partition is a hollow structure, and the partition door (33) is hidden inside the longitudinal partition when being opened.

2. The railway vehicle carriage structure according to claim 1, wherein one or more of a leisure area (20), a bathroom (19), a power distribution cabinet (24) and a washstand (18) are provided around the vestibule (12).

3. The railway vehicle carriage structure according to claim 1, wherein the carriage comprises a plurality of compartments (35) separated by compartment partitions (37), a compartment door (38) is provided on each of the compartment partitions (37), and each compartment (35) has a rest area (39) and a bathroom (40).

4. The railway vehicle carriage structure according to claim 3, wherein a sitting and sleeping dual-purpose device (51) is provided in the rest area (40), and the bathroom (40) is separated by a partition, on which a bathroom door (42) is installed.

5. The railway vehicle carriage structure according to claim 4, wherein the sitting and sleeping dual-purpose device (51) at least comprises a sofa stool and a group of multi-person sofa that can shift between sitting and sleeping, and the multi-person sofa in a sleeping position is combined with the sofa stool to form a horizontal bed.

6. The railway vehicle carriage structure according to claim 3, wherein the compartment partition (37) immediately adjacent to an aisle is a wavy structure comprising a plurality of arc-shaped partitions (14).

7. A railway vehicle, comprising the railway vehicle carriage structure according to any one of claims 1 to 6.

8. The railway vehicle according to claim 7, wherein seat units (25) arranged in the length direction of the vehicle body are included in the carriage, and a set of windows (34) corresponding to each seat unit (25) are provided on the vehicle body.

9. The railway vehicle according to claim 8, wherein the windows (34) extend continuously upward from a side wall (28) of the vehicle body to a position of a roof of the vehicle body.

10. The railway vehicle according to claim 7, wherein the carriage comprises a plurality of compartments (35) separated by a compartment partition (37), and each compartment (35) has a rest area (39) and a bathroom (40), a first window (46) is provided on a side wall (28) of the vehicle body corresponding to the rest area (39), and a second window (47) is provided on a side wall (28) of the vehicle body corresponding to the bathroom (40).

11. The railway vehicle according to claim 10, wherein the first window (46) and the second window (47) extend continuously upward from the side wall (28) of the vehicle body to a position of a roof of the vehicle body.

12. The railway vehicle according to claim 7, comprising a double-layer head carriage (1) and a double-layer middle carriage (2), wherein an upper layer of the first carriage (1) is a sightseeing carriage (1b), and a lower layer is a bar carriage (1c); an upper layer of the middle carriage (2) is a passenger carriage (2a), and a lower layer of the middle carriage is a cargo carriage (2b).

## Patentansprüche

1. Schienenfahrzeugwagenstruktur, aufweisend einen Wagen, einen Fahrzeugkörper und Türen (9) für Fahrgäste zum Ein- und Aussteigen, die auf zwei Seiten des Fahrzeugkörpers an einem Endabschnitt von mindestens einem Ende des Wagens bereitgestellt sind, wobei ein Bereich direkt gegenüberliegend der Türen (9) ein Gepäckraum (12) ist, und ein Raum des Gepäckraums (12) insgesamt kreisförmig ist,
**dadurch gekennzeichnet, dass** zwei Reihen von Sitzeinheiten (25) in dem Wagen in einer Längsrichtung des Fahrzeugkörpers bereitgestellt sind, die Sitzreihen (25) vorne und hinten versetzt sind und sich in Längsrichtung des Fahrzeugkörpers überlappen, wobei jede Sitzeinheit (25) einen Sitz (29) aufweist, und der Sitz (29) hin zu einer Seitenwand an der jeweiligen Seite geneigt ist, an der sich der Sitz (29) befindet,
wobei jede Sitzeinheit (25) durch eine Sitzzwischenwand (27) abgetrennt wird, die eine Querzwischenwand und eine Längszwischenwand aufweist, die Querzwischenwand S-förmig ist, und der Sitz (29) sich in einem Raum einer Außenseite der Querzwischenwand der Sitzeinheit (25) erstreckt, die nach außen absinkt, und sich in einem Raum einer Innenseite der Querzwischenwand der Sitzeinheiten (25) an der Vorderseite erstreckt, die nach innen absinkt,
wobei eine Abteiltür (33) in der Längszwischenwand vorgesehen ist, wobei die Abteiltür (33) eine Schiebetür ist, wobei die Längszwischenwand eine Hohlstruktur ist, und die Abteiltür (33) im Inneren der Längszwischenwand verborgen ist, wenn sie geöffnet ist.

2. Schienenfahrzeugwagenstruktur nach Anspruch 1, wobei um den Gepäckraum (12) herum ein Erholungsbereich (20), ein Badezimmer (19), ein Stromverteilerschrank (24) und ein Waschtisch (18) bereitgestellt sind.

3. Schienenfahrzeugwagenstruktur nach Anspruch 1, wobei der Wagen eine Vielzahl von Abteilen (35) aufweist, die von Abteilzwischenwänden (37) abgetrennt sind, wobei an jeder der Abteilzwischenwände (37) eine Abteiltür (37) vorgesehen ist, und jedes Abteil (35) einen Ruhebereich (39) und ein Badezimmer (40) aufweist.

4. Schienenfahrzeugwagenstruktur nach Anspruch 3, wobei eine Sitz/Schlaf-Kombivorrichtung (51) in dem Ruhebereich (39) bereitgestellt ist, und das Badezimmer von einer Zwischenwand abgetrennt wird, an der eine Badezimmertür (42) eingebaut ist.

5. Schienenfahrzeugwagenstruktur nach Anspruch 4, wobei die Sitz/Schlaf-Kombivorrichtung (51) zumindest einen Sofahocker und eine Gruppe von Mehrpersonensofas aufweist, das zwischen Sitzen und Schlafen umgestellt werden kann, und das Mehrpersonensofa in einer Schlafposition mit dem Sofahocker kombiniert wird, um ein horizontales Bett zu bilden.

6. Schienenfahrzeugwagenstruktur nach Anspruch 3, wobei die Abteilzwischenwand (37) unmittelbar angrenzend an einen Gang eine wellenförmige Struktur ist, die eine Vielzahl bogenförmiger Zwischenwände aufweist.

7. Schienenfahrzeug nach Anspruch 7, wobei Sitzeinheiten (25), die in der Längsrichtung des Fahrzeugkörpers angeordnet sind, in dem Wagen enthalten sind, und eine Menge von Fenstern (34) entsprechend jeder Sitzeinheit (25) an dem Fahrzeugkörper bereitgestellt ist.

8. Schienenfahrzeug nach Anspruch 7, wobei die Sitzeinheiten (25) in der Längsrichtung des Fahrzeugkörpers in dem Wagen enthalten sind, und eine Menge von Fenstern (34), die jeder Sitzeinheit (25) entsprechen, an dem Fahrzeugkörper bereitgestellt sind.

9. Schienenfahrzeug nach Anspruch 8, wobei sich die Fenster (34) durchgehend von einer Seitenwand (28) des Fahrzeugkörpers zu einer Position eines Dachs des Fahrzeugkörpers erstrecken.

10. Schienenfahrzeug nach Anspruch 7, wobei der Wagen eine Vielzahl von Abteilen (35) aufweist, die durch eine Abteilzwischenwand (37) abgetrennt sind, und jedes Abteil (35) über einen Ruhebereich (39) und ein Badezimmer (40) verfügt, ein erstes Fenster an einer Seitenwand (28) des Fahrzeugkörpers bereitgestellt ist, die dem Ruhebereich (39) entspricht, und ein zweites Fenster (47) an einer Seitenwand (28) des Fahrzeugkörpers bereitgestellt ist, die dem Badezimmer (40) entspricht.

11. Schienenfahrzeug nach Anspruch 10, wobei das erste Fenster (46) und das zweite Fenster (47) sich durchgehend von der Seitenwand (28) des Fahrzeugkörpers aufwärts zu einer Position eines Dachs des Fahrzeugkörpers erstrecken.

12. Schienenfahrzeug nach Anspruch 7, aufweisend einen zweistöckigen Vorderwagen (1) und einen zweistöckigen Mittelwagen (2), wobei ein oberer Stock des ersten Wagens (1) ein Aussichtswagen (1b) und ein unterer Stock ein Barwagen (1c) ist; ein oberer Stock des mittleren Wagens (2) ein Passagierwagen (2a) ist und ein unterer Stock des mittleren Wagens ein Gepäckwagen (2b) ist.

## Revendications

1. Structure de voiture de véhicule ferroviaire, comprenant une voiture, une caisse de véhicule et des portes (9) pour que les passagers puissent monter et descendre étant prévues sur deux côtés de la caisse de véhicule au niveau d'une partie d'extrémité d'au moins une extrémité de la voiture, une zone directement opposée aux portes (9) étant un vestibule (12), et un espace du vestibule (12) dans son ensemble étant circulaire,
**caractérisée en ce que** deux colonnes d'unités de siège (25) sont prévues dans la voiture dans une direction longitudinale de la caisse de véhicule, les unités de siège (25) à l'avant et à l'arrière sont décalées et se chevauchent dans la direction longitudinale de la caisse de véhicule, chaque unité de siège (25) comprend un siège (29), et le siège (29) est incliné vers une paroi latérale sur le côté respectif où le siège (29) est situé,
chaque unité de siège (25) étant séparée par une cloison de siège (27), qui comprend une cloison transversale et une cloison longitudinale, la cloison transversale étant en forme de S, et le siège (29) s'étendant dans un espace d'un côté extérieur de la cloison transversale de l'unité de siège (25) en s'enfonçant vers l'extérieur et s'étendant dans un espace d'un côté intérieur de la cloison transversale de l'unité de siège (25) à l'avant en s'enfonçant vers l'intérieur,
une porte de cloison (33) étant prévue sur la cloison longitudinale, la porte de cloison (33) étant une porte coulissante, la cloison longitudinale étant une structure creuse, et la porte de cloison (33) étant cachée à l'intérieur de la cloison longitudinale lorsqu'elle est ouverte.

2. Structure de voiture de véhicule ferroviaire selon la revendication 1, un ou plusieurs éléments parmi une zone de loisirs (20), une salle de bain (19), une armoire de distribution électrique (24) et un lavabo (18) étant prévus autour du vestibule (12).

3. Structure de voiture de véhicule ferroviaire selon la revendication 1, la voiture comprenant une pluralité de compartiments (35) séparés par des cloisons de compartiment (37), une porte de compartiment (38) étant prévue sur chacune des cloisons de compartiment (37), et chaque compartiment (35) ayant une zone de repos (39) et une salle de bain (40).

4. Structure de voiture de véhicule ferroviaire selon la revendication 3, un dispositif à double usage pour s'asseoir et dormir (51) étant prévu dans la zone de repos (40), et la salle de bain (40) étant séparée par une cloison, sur laquelle une porte de salle de bain (42) est installée.

5. Structure de voiture de véhicule ferroviaire selon la revendication 4, le dispositif à double usage pour s'asseoir et dormir (51) comprenant au moins un tabouret de sofa et un groupe de sofa à plusieurs personnes qui peut passer d'une position assise à une position couchée, et le sofa à plusieurs personnes dans la position couchée étant combiné avec le tabouret de sofa pour former un lit horizontal.

6. Structure de voiture de véhicule ferroviaire selon la revendication 3, la cloison de compartiment (37) immédiatement adjacente à une allée étant une structure ondulée comprenant une pluralité de cloisons en forme d'arc (14).

7. Véhicule ferroviaire, comprenant la structure de voiture de véhicule ferroviaire selon l'une quelconque des revendications 1 à 6.

8. Véhicule ferroviaire selon la revendication 7, des unités de siège (25) agencées dans la direction longitudinale de la caisse de véhicule étant incluses dans la voiture, et un ensemble de fenêtres (34) correspondant à chaque unité de siège (25) étant prévues sur la caisse de véhicule.

9. Véhicule ferroviaire selon la revendication 8, les fenêtres (34) s'étendant de manière continue vers le haut depuis une paroi latérale (28) de la caisse de véhicule jusqu'à une position d'un toit de la caisse de véhicule.

10. Véhicule ferroviaire selon la revendication 7, la voiture comprenant une pluralité de compartiments (35) séparés par une cloison de compartiment (37), et chaque compartiment (35) ayant une zone de repos (39) et une salle de bain (40), une première fenêtre (46) étant prévue sur une paroi latérale (28) de la caisse de véhicule correspondant à la zone de repos (39), et une deuxième fenêtre (47) étant prévue sur une paroi latérale (28) de la caisse de véhicule correspondant à la salle de bain (40).

11. Véhicule ferroviaire selon la revendication 10, la première fenêtre (46) et la deuxième fenêtre (47) s_{'}étendant de manière continue vers le haut depuis la paroi latérale (28) de la caisse de véhicule jusqu'à une position d'un toit de la caisse de véhicule.

12. Véhicule ferroviaire selon la revendication 7, comprenant une voiture de tête à double couche (1) et une voiture intermédiaire à double couche (2), une couche supérieure de la première voiture (1) étant une voiture de tourisme (1b), et une couche inférieure étant une voiture de bar (1c) ; une couche supérieure de la voiture intermédiaire (2) étant une voiture de passagers (2a), et une couche inférieure de la voiture intermédiaire étant une voiture de marchandises (2b).
